# DEMANDE DE BREVET EUROPEEN

(11) **EP 0 616 219 A1**
(43) Date de publication de la demande: **21.09.1994**
(21) Numéro de dépôt: 94400471.2
(22) Date de dépôt: 04.03.1994
(51) Int. Cl.: G01P 3/44

(54) **Ensemble comportant joint d'étanchéité et capteur de vitesse**

(30) Priorité: 15.03.1993 US 31515
(71) Demandeur: SNR ROULEMENTS, F-74000 Annecy (FR)
(72) Inventeur: Polinsky, Mark A., F-75116 Paris (FR); Grillo, John M., F-75116 Paris (FR); Duncan, Scott M., F-75116 Paris (FR)
(74) Mandataire: Ballot, Paul Denis Jacques

(57) **Abrégé**

L'invention concerne un dispositif de captage de la vitesse d'un arbre.

Le dispositif comprend un joint d'étanchéité 16 et un capteur magnéto-sensible 18 est également relié à un support 14 pour capter les polarités d'un aimant porté par un arbre tournant 22; le capteur 18 produit dans un conducteur 20 un signal de sortie dont la tension correspond ou est proportionnelle à la vitesse de rotation de l'arbre; en fonction du type de capteur utilisé, la tension du signal de tension a une amplitude variant périodiquement (par exemple : signal digital ou sinusoïdal), ou une amplitude donnée, pour laquelle le signal va cyliquement de zéro à l'amplitude donnée et revient à zéro, ou bien l'amplitude de la tension du signal de sortie de forme sinusoïdale augmente à mesure que la vitesse croît, ou bien la largeur des impulsions diminue en fonction de l'augmentation de la vitesse.

Application au captage de vitesse des arbres de roues de véhicules.

## Description

La présente invention concerne un dispositif pour détecter la vitesse de roues d'un véhicule en produisant une tension correspondant ou proportionnelle à la vitesse, ou bien une série d'impulsions état haut/état bas à une tension choisie par le client, et en particulier un capteur de vitesse qui est associé à un joint d'étanchéité aux fluides, comme le joint de sortie d'un carter de transmission d'un véhicule, sous forme d'un ensemble comportant à la fois le joint d'étanchéité et le capteur.

Les capteurs de vitesses connus, dans des automobiles à roues avant motrices, sont typiquement disposés aux extrémités de l'essieu côté roue. Le capteur standard est du type à réluctance variable qui détecte une roue phonique ou une roue dentée emmanchée sur l'arbre. Pour obtenir la précision nécessaire avec ce type de capteur, l'arbre doit être usiné spécialement pour satisfaire aux spécifications imposées par les fabricants d'essieux. Egalement, les systèmes de captage connus nécessitent, après installation, un réglage pour assurer un entrefer dans la plage de fonctionnement du capteur. En outre, de la chaleur provenant des freins peut faire sortir le capteur des limites supérieures de sa plage de fonctionnement normale.

On se rend compte ainsi qu'il existe des limitations pour les dispositifs de captage de vitesses connus à l'heure actuelle. En conséquence, il serait avantageux de concevoir un dispositif permettant de remédier à une ou plusieurs des limitations définies ci-dessus. C'est l'objet de la présente invention.

Selon un aspect de l'invention, il est créé un ensemble à joint d'étanchéité aux fluides et capteur de vitesse comprenant un support de joint, un joint associé au support et un capteur magnéto-sensible relié au support.

D'autres caractéristiques et avantages de l'invention seront mis en évidence à la suite de la description, donnée à titre d'exemple non limitatif, en relation avec des dessins ci-joints dans lesquels:
- les figures 1 et 2 représentent un montage du capteur de vitesse disposé dans le support de joint d'étanchéité et assurant la détection d'un codeur, monté sur et tournant avec l'arbre de sortie d'une transmission de véhicule, cet ensemble comprenant le capteur et le joint étant disposé dans le carter de la transmission;
- la figure 3 est une vue en coupe montrant une variante de réalisation de l'invention dans laquelle un anneau-codeur est utilisé en association avec une cuvette de guidage;
- la figure 4 est une vue en perspective de la moitié de l'anneau-codeur de la figure 3;
- la figure 5 est une vue en plan de la moitié de l'anneau-codeur de codage de la figure 4, mettant en évidence une partie d'une sonde de captage engagée dans la cuvette de guidage; et
- les figures 6 à 22 sont des vues en coupe d'autres montages de l'invention, les représentations correspondant, d'une façon générale, à celles de la figure 3.

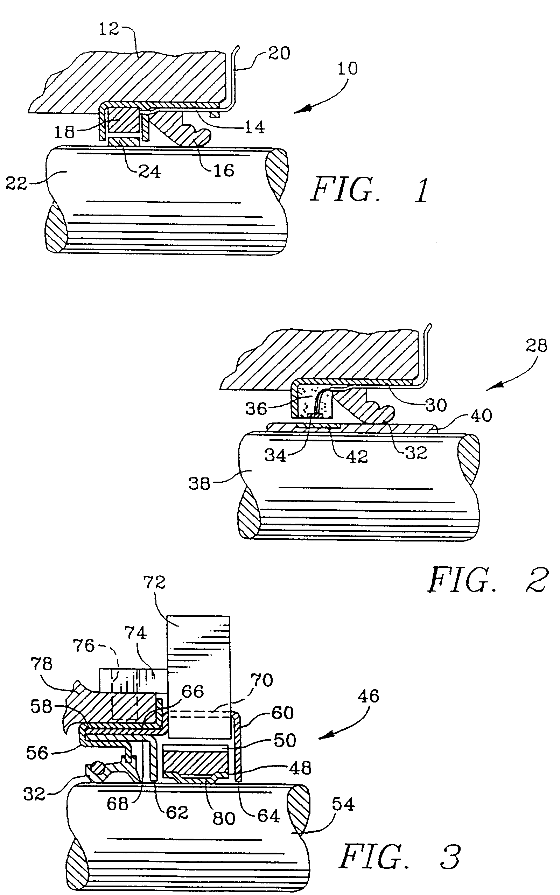

Dans une première réalisation de l'invention, un ensemble 10 comportant un joint d'étanchéité et un capteur de vitesse, figure 1, est installé dans le carter 12 de la transmission d'un véhicule. Un collier circulaire 14 comprend un support pour le joint d'arbre 16 et pour le capteur de vitesse 18. Ce dernier comprend, par exemple, un dispositif à effet Hall qui fournit, par l'intermédiaire d'un conducteur 20, un signal impulsionnel du type digital à un convertisseur analogique (non représenté). Eventuellement, il est possible d'utiliser d'autres capteurs, comme un dispositif à réluctance variable pour produire une tension sinusoïdale d'amplitude croissante à mesure que la vitesse augmente, ou bien des dispositifs produisant des impulsions de tension et d'amplitude uniformes mais dont la largeur diminue à mesure que la vitesse augmente. L'arbre 22, autour duquel l'ensemble 10 est disposé, porte un aimant 24 de polarisation Nord-Sud pour déclencher le capteur 18, conformément à une pratique bien connue dans l'art antérieur. L'aimant 24 comprend un matériau en élastomère chargé de ferrite, qui est flexible et peut être lié à l'acier.

Sur la figure 2, l'ensemble joint-capteur de vitesse 28 comporte un collier circulaire plat 30 semblable pour porter le joint d'arbre 32 et le capteur de vitesse 34. Ce dernier est logé dans une masse de résine époxy 36 qui est collée sur le collier 30. L'arbre 38 est pourvu d'un manchon trempé 40 dans lequel est incorporé l'aimant de polarisation Nord-Sud 42. L'aimant 42 comporte une pièce magnétique pourvue de pôles Nord et Sud en alternance et créés pour un dispositif d'aimantation.

Un montage de l'invention 46, représentée sur la figure 3, utilise un anneau-codeur de codage 48 pour assurer le codage de l'arbre 54, ainsi qu'une cuvette de guidage 60 dans laquelle est logé l'anneau 48. L'anneau 48 porte, sur sa circonférence extérieure, l'aimant 50 de polarisation Nord et Sud. L'anneau 48 est emmanché sur l'arbre 54, de façon à être en contact frottant avec lui et à tourner en même temps que l'arbre 54. Le support de joint 56 est pourvu d'un canal annulaire 58. La cuvette de guidage 60 comporte deux parois radiales 62 et 64 qui sont disposées de part et d'autre de l'anneau 48, et une paire de parois cylindriques et parallèles 66 et 68. Les parois 66 et 68 sont emmanchées à l'intérieur du canal 58.

La cuvette de guidage 60 est pourvue d'une cavité 70 pour recevoir une sonde de captage 72. La sonde 72 comporte une branche 74 disposée en saillie et pourvue d'un trou 76 de réception d'organe de fixation en vue de la fixation de l'ensemble 46 sur le carter 78 de la transmission.

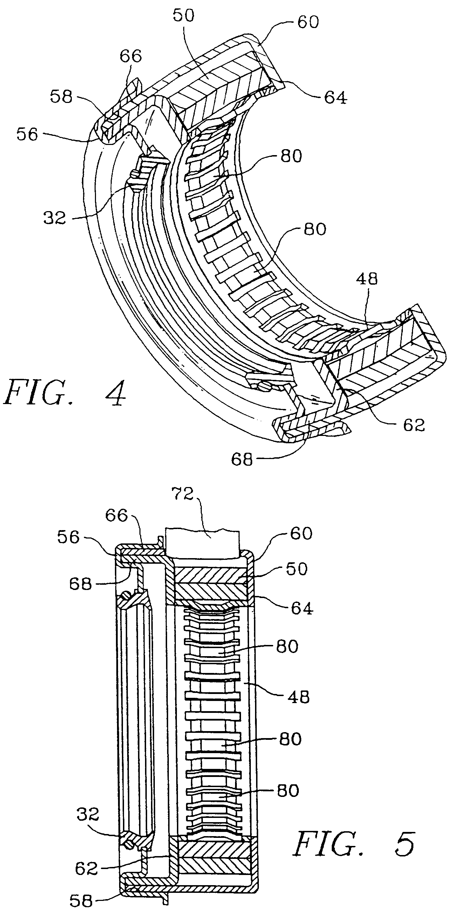

La figure 4 représente, en vue en perspective, une moitié de l'anneau de codage 48 de la figure 3. Il comporte plusieurs nervures 80 qui sont orientées transversalement et qui assurent le blocage sur l'arbre pour permettre une rotation commune avec lui. La figure 5 représente une vue en plan de la moitié de l'anneau de codage de la figure 4, les deux figures montrant l'agencement du support de joint d'étanchéité 56 et de la cuvette de guidage 60 en association avec l'anneau de codage 48 porté par l'arbre. Une partie de la sonde de captage 72 a été représentée en condition d'engagement dans la cuvette de guidage 60 de la figure 5.

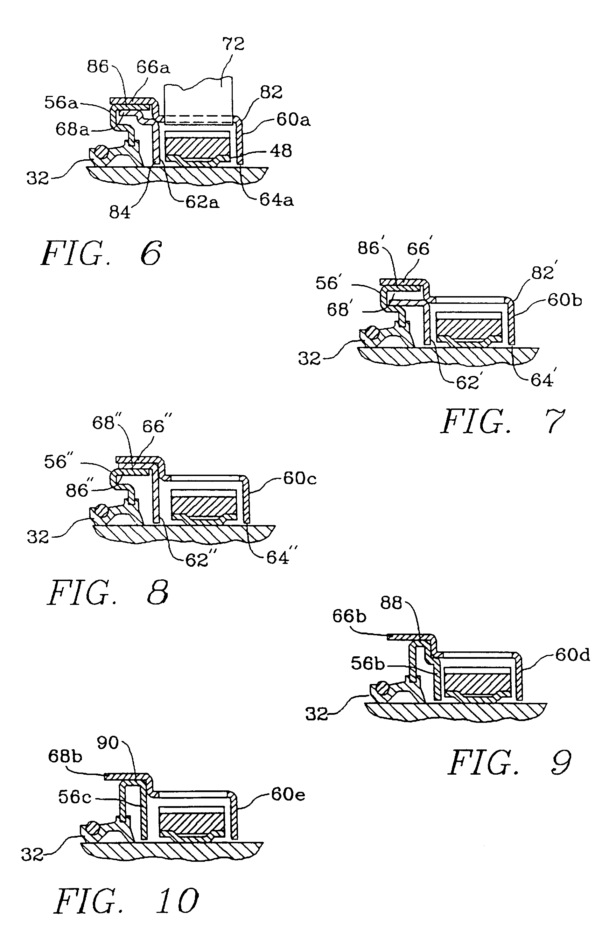

Les figures 6, 7 et 8 représentent des réalisations de l'invention dans lesquelles les cuvettes de guidage 60a, 60b et 60c comprennent respectivement des éléments doubles. Les éléments 82 et 84 de la cuvette 60a de la figure 6 comportent des parois radiales 62a et 64a entre lesquelles est disposé l'anneau 48. Les éléments 82 et 84 comportent en outre des parois cylindriques 66a et 68a. Le support de joint d'étanchéité 56a comporte également une paroi cylindrique 86 qui est en contact frottant avec les parois 66a et 68a et qui est disposée entre elles.

Sur les figures 7 et 8, sont représentés des agencements tout à fait semblables à celui représenté sur la figure 6 et des références numériques identiques semblables, comme indiqué sur la figure 6, désignent des structures identiques et semblables.

Les figures 9 et 10 représentent d'autres réalisations de l'invention dans lesquelles les cuvettes de guidage 60d et 60e sont constituées respectivement par des structures à un seul élément. Chaque cuvette comporte respectivement une paroi cylindrique 66b et 68b. Les supports de joint d'étanchéité 56b et 56c comportent respectivement des parties coudées 88 et 90 qui sont en contact frottant avec les parois cylindriques respectives précitées 66b et 68b.

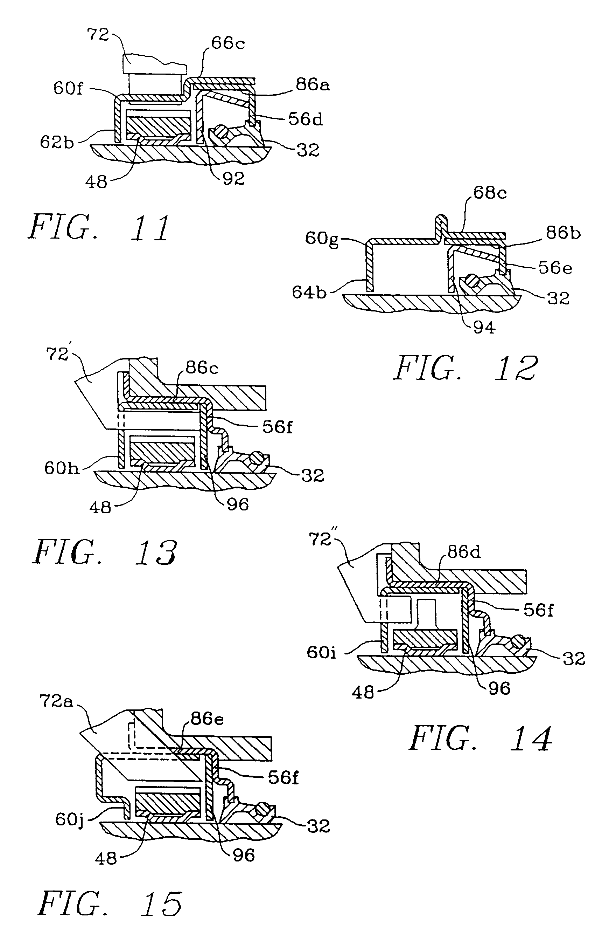

Sur les figures 11 et 12, on a représenté plusieurs réalisations de l'invention dans lesquelles les cuvettes de guidage 60f et 60g comportent respectivement, une paroi radiale 62b et 64b pour assurer le guidage de l'anneau-codeur 48, ainsi qu'une paroi cylindrique 66c et 68c, pour rentrer en contact frottant avec une paroi cylindrique respective 86a, 86b, des supports de joints d'étanchéité 56d et 56e. En outre, un élément à paroi radiale 92 et 94, est interposé entre les supports 56d et 56e et l'anneau 48.

Les réalisations de l'invention représentées sur les figures 13, 14 et 15 utilisent des rondelles pour faciliter le guidage de l'anneau-codeur 48. Dans chacun de ces agencements, une cuvette de guidage 60h, 60i et 60j à un seul élément est respectivement appliqué au contact des parois cylindriques 86c, 86d et 86e, des supports de joint d'étanchéité 56f. Les rondelles 96 sont interposées entre les supports et l'anneau 48.

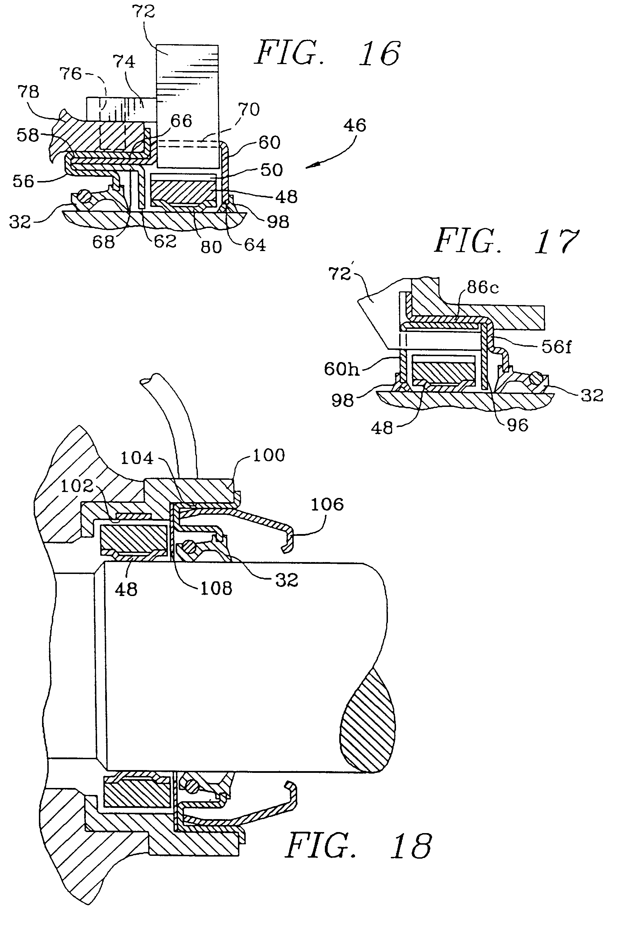

Les figures 16 et 17 représentent des réalisations de l'invention qui correspondent respectivement aux réalisations des figures 3 et 13. Cependant, il est prévu dans ce cas un autre joint d'étanchéité 98 qui est relié à une paroi radiale de la cuvette de guidage respective 60 et 60h. Le joint d'étanchéité 98 est utilisé comme un guide dans un dispositif qui sert à maintenir l'anneau-codeur 48 en place en cours d'installation.

La figure 18 représente encore une autre réalisation de l'invention dans laquelle le capteur comprend une pièce annulaire 100 dans laquelle sont formés des évidements étagés 102 et 104. L'anneau-codeur 48 est mis en place dans l'évidement 102 et le support de joint d'étanchéité 106 est mis en place dans l'autre évidement 104. Une rondelle 108 est interposée entre le support 106 et l'anneau 48 afin de coopérer avec l'évidement 102 pour guider l'anneau 48.

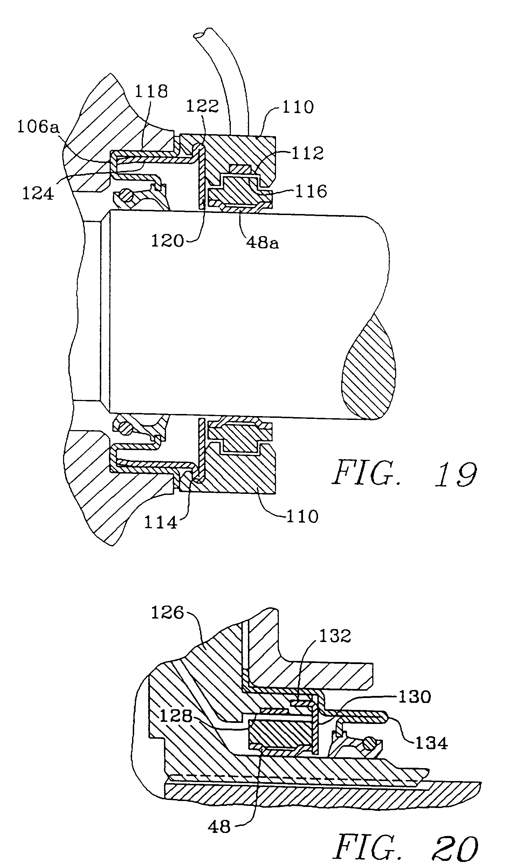

La figure 19 représente une variante de la réalisation de l'invention représentée sur la figure 8, où à nouveau le capteur comprend une pièce annulaire 110 qui est pourvue d'un canal annulaire 112 et d'une rainure annulaire 114. L'anneau de codage 48a comporte une nervure annulaire 116 qui est emboîtée dans le canal 112. Le support de joint d'étanchéité 106a comporte une paroi cylindrique 118 et une cuvette de guidage 120 à un seul élément comporte une partie coudée 122 qui est emboîtée de la même manière dans la rainure 114. Egalement, la cuvette 120 comporte une paroi cylindrique 124 qui entre en contact frottant avec la paroi 118 du support de joint d'étanchéité 106a.

La figure 20 représente une autre réalisation de l'invention dans laquelle le capteur comprend à nouveau une pièce annulaire 126 dans laquelle est formée un évidement 128. L'anneau-codeur 48 est mis en place dans l'évidement 128 et la cuvette de guidage 130 à un seul élément est appliquée contre l'anneau 48 et est engagée dans une fente cylindrique 132 formée dans une surface extérieure de la pièce annulaire 126. Le support de joint d'étanchéité 134 est mis en place dans une extrémité de la pièce annulaire 126 et est appliqué contre la cuvette 130. Comme indiqué, l'ensemble peut être boulonné sur le côté extérieur de la transmission.

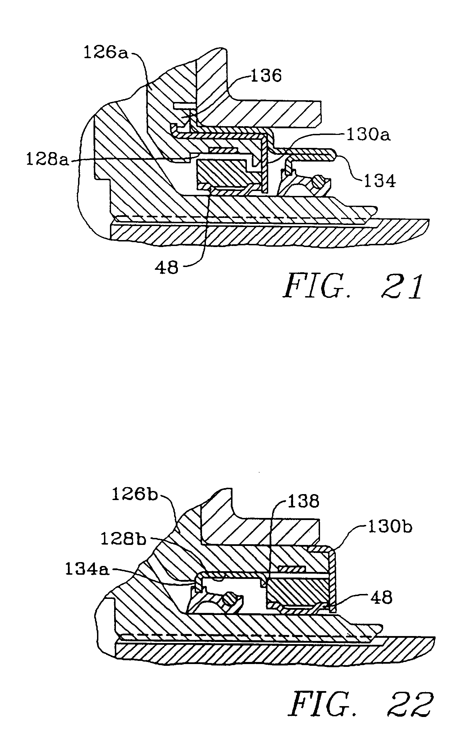

Sur la figure 21 est représenté un agencement semblable à celui de la figure 20, excepté que la pièce annulaire 126a comporte un évidement 128a plus profond pour l'anneau-codeur 48 et que la cuvette de guidage 130a est pourvue d'une lèvre extérieure engagée dans une rainure radiale 136 formée dans la pièce annulaire 126a. Cet agencement permet à la pièce annulaire 126a d'être emboîtée en position sur la cuvette de guidage 130a, en vue de faciliter l'assemblage et le désassemblage.

Dans une autre et dernière réalisation de l'invention, réprésentée sur la figure 22, la pièce annulaire 126b comporte un évidement étagé 128b formé à l'intérieur. Le support de joint d'étanchéité 134a est mis en place dans une première partie de l'évidement et il comporte une lèvre radiale 138 exposée de façon à être placée contre l'anneau-codeur 48. Cet anneau 48 est mis en place dans la seconde partie restante de l'évidement 128b. Une cuvette de guidage 130b est disposée le long de l'anneau 48 et est appliquée contre une extrémité de la pièce annulaire 126b du capteur.

Bien que l'invention ait été décrite en relation avec des réalisations spécifiques, il va de soi que cette description a été faite seulement à titre d'exemple et ne limite pas la portée de l'invention qui est définie dans les revendications ci-jointes.

## Revendications

**1 -** Ensemble comportant un joint d'étanchéité aux fluides et un capteur de vitesse, caractérisé en ce qu'il comprend:
- un support (14;30) de joint d'étanchéité;
- un joint d'étanchéité (16;32) relié audit support (14;30); et
- un capteur magnéto-sensible (18;34) relié audit support (14;30).

**2 -** Ensemble à joint et capteur de vitesse selon la revendication 1, caractérisé en ce que ledit support comprend un collier circulaire (14) comportant des surfaces intérieures et extérieures, ledit joint d'étanchéité (16) étant fixé sur ladite surface intérieure dudit collier (14) et ledit capteur s'étendant à partir de ladite surface intérieure du collier (14).

**3 -** Ensemble à joint et capteur de vitesse selon la revendication 1, caractérisé en ce qu'il comprend en outre:
- un anneau-codeur (48) pour entrer en contact frottant et tourner avec un arbre rotatif (54); et
- une cuvette de guidage (60), ledit anneau (48) étant maintenu à l'intérieur de ladite cuvette et ledit capteur pénétrant dans ladite cuvette et comportant une partie disposée à proximité dudit anneau-codeur.

**4 -** Ensemble à joint et capteur de vitesse selon la revendication 3, caractérisé en ce que dans ledit support (56) est formé un canal annulaire (58), ladite cuvette (60) comporte deux parois parallèles cylindriques (66,68) qui sont engagées avec friction à l'intérieur dudit canal (58).

**5 -** Ensemble à joint et capteur de vitesse selon la revendication 4, caractérisé en ce que ledit capteur (72) comporte une branche (74) disposée en saillie, ladite branche (74) étant pourvue d'un trou (76) de réception d'organe de fixation en vue d'une fixation amovible dudit ensemble (46) sur une structure immobile.

**6 -** Ensemble à joint et capteur de vitesse selon la revendication 1, caractérisé en ce qu'il comprend en outre:
- un anneau-codeur (48) disposé de façon à entrer en contact frottant et à tourner avec un arbre rotatif, et
- une cuvette de guidage (60a;60b;60c) à éléments doubles, chacun desdits éléments doubles (82,84) comportant une paroi radiale (62a; 64a), lesdites parois étant espacées l'une de l'autre et maintenant entre elles ledit anneau-codeur (48), lesdits éléments comportant en outre des parois cylindriques (66a; 68a) circonférentiellement adjacentes audit joint et ledit support (56a) comportant une paroi cylindrique (86) en contact frottant avec une desdites parois desdits éléments.

**7 -** Ensemble à joint et capteur de vitesse selon la revendication 3, caractérisé en ce que ladite cuvette de guidage (60d; 60e) comporte une paroi radiale, ledit support (56b; 56c) comporte une paroi radiale, lesdites parois étant espacées l'une de l'autre et maintenant entre elles ledit anneau de guidage (48), ladite cuvette comportant en outre une paroi cylindrique circonférentiellement adjacente audit joint et ledit support comportant en outre une partie coudée (88, 90) en contact frottant avec ladite paroi cylindrique de ladite cuvette.

**8 -** Ensemble à joint et capteur de vitesse selon la revendication 3, caractérisé en ce que ledit support (56d; 56e) comporte une paroi cylindrique, ladite cuvette (60f; 60g) comporte une paroi radiale (62b; 64b) parallèle audit anneau de codage (48) ainsi qu'une paroi cylindrique circonférentiellement adjacente audit joint, ladite paroi dudit support étant en contact frottant avec ladite paroi de ladite cuvette, et il est en outre prévu un élément de paroi radiale, interposé entre ledit joint et ledit anneau-codeur (48) et coopérant avec ladite paroi radiale de ladite cuvette pour maintenir ledit anneau (48) entre eux.

**9 -** Ensemble à joint et capteur de vitesse selon la revendication 3, caractérisé en ce que ledit support (56f) comporte une paroi cylindrique et une paroi radiale, ladite cuvette (60h; 60i; 60j) comporte une paroi radiale orientée parallèlement audit anneau-codeur (48) ainsi qu'une paroi cylindrique en contact frottant avec ladite paroi cylindrique dudit support et il est en outre prévu une rondelle (96) interposée entre ledit anneau-codeur (48) et ladite paroi radiale dudit support (56f), en coopérant avec ladite paroi radiale de ladite cuvette pour maintenir ledit anneau (48) entre elles.

**10 -** Ensemble à joint et capteur de vitesse selon la revendication 4, caractérisé en ce que ladite cuvette (60; 60h) comporte en outre deux parois radiales, espacées l'une de l'autre, lesdites parois radiales maintenant ledit anneau (48) entre elles et une desdites parois radiales comportant un joint d'étanchéité (98) relié avec elles.

**11 -** Ensemble à joint et capteur de vitesse selon la revendication 9, caractérisé en ce qu'il comprend en outre:
- un joint d'étanchéité (98) relié à ladite paroi radiale de ladite cuvette (60; 60h).

**12 -** Ensemble à joint et capteur de vitesse selon la revendication 1, caractérisé en ce qu'il comprend en outre:
- un anneau-codeur (48), ledit capteur comprenant une pièce annulaire (100) dans laquelle sont formés des évidements (102, 104), ledit anneau-codeur (48) étant disposé dans un desdits évidements (102, 104), ledit support (106) étant disposé dans l'autre évidement; et
- une rondelle (108) interposée entre ledit support (106) et ledit anneau-codeur (48), ladite rondelle et ladite pièce annulaire (100) maintenant entre elles ledit anneau-codeur (48).

**13 -** Ensemble à joint et capteur de vitesse selon la revendication 1, caractérisé en ce qu'il comprend en outre:
- un anneau-codeur (48a), cet anneau (48a) comporte une nervure annulaire (114), ledit capteur comprenant une pièce annulaire (110) pourvue d'un canal annulaire (112) et d'une rainure annulaire (116), ladite nervure (116) et ledit canal (112) étant reliés de façon amovible par emboîtement mutuel, ledit support (106a) comporte une paroi cylindrique (118); et
- une cuvette de guidage (120), ladite cuvette comportant une partie coudée (122) qui établit une liaison d'emboîtement avec ladite rainure annulaire (114), et il est prévu une paroi cylindrique (124) qui entre en contact frottant avec ladite paroi (118) dudit support (106a).

**14 -** Ensemble à joint et capteur de vitesse selon la revendication 1, caractérisé en ce qu'il comprend en outre:
- un anneau-codeur (48), ledit capteur comprenant une pièce annulaire (126) pourvue d'un évidement (128), ledit anneau (48) étant disposé dans ledit évidement (128); et
- une cuvette de guidage (130), ladite cuvette étant appliquée contre ledit anneau (48) et étant en contact avec ledit capteur, et ledit support étant en contact avec ladite cuvette.

**15 -** Ensemble à joint et capteur de vitesse selon la revendication 1, caractérisé en ce qu'il comprend en outre:
- un anneau-codeur (48), ledit capteur (126b) comportant un évidement étagé (128b), ledit support (134a) étant disposé dans une première partie dudit évidement, ledit anneau (48) étant disposé dans une seconde partie dudit évidement, parallèlement audit support; et
- une cuvette de guidage (130b), en contact avec ledit capteur et appliquée contre ledit anneau (48).
